# EUROPÄISCHE PATENTANMELDUNG

(11) **EP 3 106 277 A1**
(43) Veröffentlichungstag der Anmeldung: **21.12.2016**
(21) Anmeldenummer: 16173716.8
(22) Anmeldetag: 09.06.2016
(51) Int. Cl.: B28B 1/16, B32B 13/02, B28B 19/00, B28B 23/00, E04C 2/26, B28B 11/04

(54) **PLATTE SOWIE HERSTELLUNGSVERFAHREN DAFÜR**

(30) Priorität: 12.06.2015 DE 102015109435
(71) Anmelder: Hollmann, Ulrich, 27383 Scheeßel (DE)
(72) Erfinder: Hollmann, Ulrich, 27383 Scheeßel (DE)
(74) Vertreter: Hansen, Jochen

(57) **Zusammenfassung**

Die Erfindung betrifft ein Verfahren zur Herstellung einer Platte (1) mit den Schritten, Aufbringen einer ersten Tragschicht (21) auf einer ebenen Unterlage, Auflegen einer ersten Faserlage (31) auf dieser ersten Tragschicht (21), Aufbringen einer zweiten Tragschicht (22) auf der ersten Faserlage (31), Auflegen einer zweiten Faserlage (32) auf dieser zweiten Tragschicht (22), sowie Aufbringen einer dritten Tragschicht (23) auf der zweiten Faserlage (32), wobei die Stärke der Tragschichten durch grobe, skalierte Partikel in der aufzutragenden Masse gesteuert wird, wobei nach einer ersten Trockenzeit das Auftragen einer Farbspachtelschicht (5), Auftragen einer Versiegelung (6) und/oder Imprägnierung und nach einer zweiten Trockenzeit das Ausformen der Platte (1) von der ebenen Unterlage.

Ferner betrifft die Erfindung eine Platte (1) die eine zementgebundene, faserverstärkte Tragschicht (2) aufweist, wobei sie einseitig mit einer Farbspachtelschicht (5) aus Weißzement beschichtet ist.

## Beschreibung

Die Erfindung betrifft eine Platte aufweisend eine zementgebundene, faserverstärkte Tragschicht. Ferner betrifft die Erfindung ein Verfahren zur Herstellung dieser Platte.

Derartige Platten sind für Bauzwecke in unterschiedlicher Ausgestaltung bekannt.

In der DE 196 13 168 A1 wird eine Bauplatte aus Kunstharz beschrieben, die eine Armierung aus Glasfasergewebe aufweist. Das Glasfasergewebe kann in zwei Lagen auf beiden Seiten einer aus Kunstharz bestehenden Trägerschicht angeordnet werden. Die Trägerschicht weist bevorzugt leichte Zuschlagstoffe und gegebenenfalls zusätzlich kleinere Hohlräume auf, um die Kosten und das Gewicht der Platte zu reduzieren. Dabei dienen diese Platten mit einer entsprechend ausreichenden Materialstärke zur Erstellung von Trennwänden, beispielsweise in Nasszellen, wofür die wasserdichte Konstruktion geeignet ist.

Ferner ist aus der DE 78 21 842 U1 eine Schichtverbundplatte aus anorganisch-und kunststoffgebundenen Schichten bekannt, deren Grundplatte oder Kern im Wesentlichen aus anorganischem Material und die Deckschicht oder Deckschichten im Wesentlichen aus Kunststoffmassen bestehen. Dabei ist der Kern beispielsweise aus Zementbindemittel mit Verstärkungsfasern, wobei die darauf angeordnete Deckschicht oder Deckschichten aus faserverstärkten Kunststoffmassen oder aus faserverstärkten, kunststoffvergüteten anorganischen Massen bestehen, die selbst eine tragende Funktion für die Verbundplatte übernehmen.

Die DE 10 2008 019 093 A1 beschreibt ein flexibel kombinierbares Element-System zum vor Ort-Ausbau von Bädern. Die Wandplatte für Feuchträume umfasst eine Schicht bestehend aus Kunstharz-Klebstoffen mit Glasfasergewebeeinlage sowie Beschichtungen mit Quarzsanden. Die Wandplatte dient dabei als Unterkonstruktion für eine aufzubringende Fliesenschicht.

Ferner ist es bekannt, eine Farbspachtelschicht auf einem vorbereiteten Untergrund als ästetische, für die jeweiligen Wohnzwecke geeignete Sicht- und Nutzungsfläche zu verwenden. Dabei ist das handwerkliche Auftragen der Farbspachtelschicht handwerklich aufwendig.

Für das Aufbringen einer solchen Schicht-Optik ist zunächst eine ausfüllende Schicht auf der zu renovierenden Wand oder dem Estrich aufzubringen. Darin wird als Lastausgleich und Rissschutz eine Glasfasergewebelage eingelegt. Nach dem Austrocknen (2-3 Tage) erfolgt der Auftrag einer Farbspachtelschicht, bestehend aus Weißzement mit Farbpigmenten, wobei das Spachtelmuster in beispielsweise zwei oder drei Schichten aufgebracht wird. Um das so erzeugte Spachtelmuster wasserfest auszustatten, wird auf seiner Oberfläche nach einer weiteren Trockenzeit eine Versiegelung, beispielsweise auf Polyurethan basierend und/oder eine Imprägnierung vorgenommen.

Nachteilig an dieser Methode ist, dass alle Schichten vor Ort aufgebracht werden müssen, was einerseits die handwerkliche Kompetenz der vor Ort Arbeitenden erfordert und entsprechende Trockenzeiten von mehreren Tagen für das erforderliche Austrocknen der aufgebrachten Schichten bedingt. Insgesamt sind derartige Bauausführungen somit nur in mehreren Arbeitstagen ausführbar, was insbesondere bei Renovierungstätigkeiten in Küche oder Bad zu einer erheblichen Beeinträchtigung der Wohnsituation führt.

Aufgabe der Erfindung ist es daher, die erheblichen Trockenzeiten vor Ort und die hohe Fachkunde vor Ort beim Auftragen der Schichten zu vermeiden.

Gelöst wird diese Aufgabe mit einem Verfahren zur Herstellung einer Platte sowie mit einer Platte gemäß einem der Ansprüche 1 und 6.

Mit dem Herstellungsverfahren gemäß Anspruch 1 wird eine dünne, ausreichend eigenstabile Platte mit einer wasserfesten Sichtseite erstellt, die eine ähnlich des Handauftrags direkt auf der Wand gestaltete Farbspachtelschicht darstellt. Diese Platte weist eine relativ dünne, zementgebundene und faserverstärkte und somit stabile Tragschicht auf, auf der einseitig oder bedarfsweise auch beidseitig eine Farbspachtelschicht gleicher ästhetischer Wirkung aus Weißzement aufgetragen ist.

Diese Platten können bei einer Bad- oder Küchenrenovierung an geeigneten Einbaustellen, beispielsweise oberhalb der Küchenarbeitsfläche, im Duschbereich oder als Bodenbelag flächig auf dem entsprechend vorbereiteten und ebenen Untergrund aufgeklebt werden. Dabei ist es von besonderem Vorteil, dass die Platten eine geringe Materialstärke aufweisen und innerhalb kürzester Zeit wieder die Nutzung erfolgen kann. So kann eine Badrenovierung beispielsweise innerhalb eines Tages durchgeführt werden und nach Abbinden des Klebers und etwaiger dauerelatischer Dehnungsfugen (Silikonabdichtungen) am nächsten Tag das Bad bereits benutzt werden. Dabei ist die Aufbauhöhe der erfindungsgemäßen Platte lediglich 2,5 bis 9,0 mm, bevorzugt 3,0 bis 5,0 mm.

Ferner können die Platten auch auf Möbeloberflächen, beispielsweise Tischplatten, verwendet werden. Ferner können auch Formelemente auf entsprechenden Formen erstellt werden, wie beispielsweise im Querschnitt L-förmige Treppenstufenelemente. Damit können Treppen, insbesondere Stein-und Betontreppen mit den so vorgefertigten dünnen Formelementen Stufe für Stufe beklebt werden. Nach Abbinden des Klebers kann die Treppe schnell wieder bestimmungsgemäß genutzt werden.

Um eine Gleichmäßigkeit und besondere ästhetische Wirkung zu erzielen, wird die Farbspachtelschicht in zwei oder mehreren Teilschichten nacheinander aufgetragen.

Wenn nach dem Ausformen auf der bei der Herstellung der Platte zur ebenen Unterlage zeigenden Rückseite eine erste Haftgrundierung aufgetragen wird, wird die Haftung der Platte auf dem Untergrund, insbesondere in Verbindung mit hydraulisch härtenden Klebern, wie Fliesenkleber oder dergleichen, deutlich verbessert.

Dadurch, dass nach der ersten Trockenzeit und vor dem Auftragen der Farbspachtelschicht die Tragschicht geschliffen wird, wird eine besonders ebene und gleichmäßige Farbspachtelschicht ermöglicht.

In weiterer Ausgestaltung wird nach der ersten Trockenzeit und vor dem Auftragen der Farbspachtelschicht die Tragschicht mit einer zweiten Haftgrundierung versehen, um ebenfalls den Haftverbund der hier aufgebrachten Farbspachtelschicht zu verbessern.

Entsprechend ist die Platte bevorzugt mit einer Farbspachtelschicht aus zwei oder mehrerer Teilschichten aufgebaut, die gegebenenfalls unterschiedliche Farbpigmente enthalten. Je nach manueller Spachteltechnik werden somit streifige, bogenförmige, schuppenförmige und sich überlappende Muster je nach ästhetischen Wünschen erzeugt.

Die Tragschicht besteht aus Zement, insbesondere Weißzement, Quarzsand und einer Kunstharzemulsion. Diese Bestandteile werden miteinander vermischt, wobei die Kunstharzemulsion das für das Anmachen erforderliche Wasser enthält oder dieses gesondert zugeführt wird. Dabei sind in dieser angerührten Masse zwei zueinander beabstandet angeordnete Faserlagen einzubringen. Nach hydraulischem Abbinden der angerührten Masse mit den darin vorgesehenen Faserlagen entsteht eine Tragschicht hoher Steifigkeit.

Wenn die freie Oberfläche der Farbspachtelschicht mit einer Versiegelung auf PU-Basis beschichtet ist, ist die Platte wasserfest ausgebildet und kann beispielsweise als Wandelement in Duschbereichen oder als Bodenelement in Bädern eingesetzt werden.

Bevorzugt weisen die Tragschicht eine Stärke von 2 bis 6 mm, insbesondere 3 bis 5 mm und die Farbspachtelschicht eine Stärke von 0,5 bis 3 mm, insbesondere 1 bis 2 mm auf.

Nachfolgend wird ein bevorzugtes Ausführungsbeispiel anhand der beiliegenden Figuren detailliert beschrieben.

Darin zeigt:
- Fig. 1: eine Platte in Ansicht,
- Fig. 2: einen ausgeschnittenen, vergrößerten Querschnitt durch eine Platte gemäß Figur 1,
- Fig. 3.: ein Einbaubeispiel für Platten gemäß Fig. 1 in Draufsicht und
- Fig. 4: eine alternative Ausführung einer Platte als Formteil zur Treppensanierung.

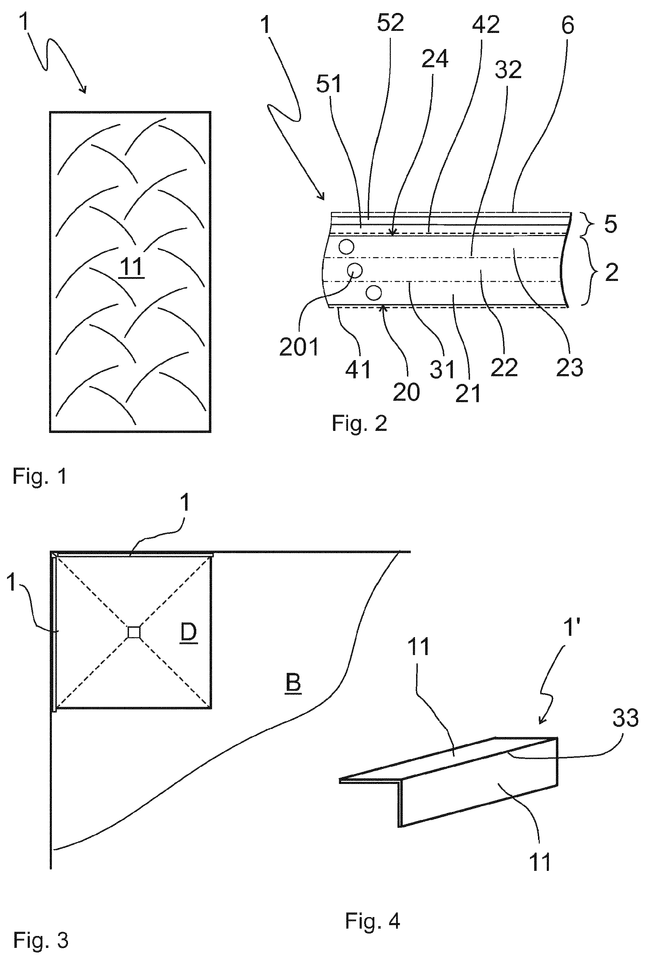

In Figur 1 ist eine erfindungsgemäße Platte 1 in einer Draufsicht auf seine als Farbspachtelschicht 5 gestaltete Sichtfläche 11 dargestellt.

Wie in Figur 2 aus dem ausgeschnittenen, vergrößerten Querschnitt der Platte gemäß Figur 1 ersichtlich ist, ist eine Tragschicht 2 aus einer ersten Tragschicht 21, einer darüber angeordneten ersten Faserlage 31, einer zweiten Tragschicht 22, einer darüber liegenden zweiten Faserlage 32 und einer dritten Tragschicht 23 gebildet. Um eine möglichst dünne und gleichmäßige Ausbildung der drei Tragschichten 21, 22 und 23 sicherzustellen, ist die Tragschicht aus einer mineralischen Masse gebildet, die neben Zement groben Quarzsand enthält, dessen Partikel 201 eine Partikelgröße von etwa der maximalen Höhe der jeweils gewünschten Tragschicht, beispielsweise 0,7 mm haben.

Beim Verstreichen der angerührten Masse für die Tragschicht wird diese auf die Größe der Quarzsand-Partikel 201, also 0,7 mm ausgezogen, die erste Faserlage 31 aufgelegt, die zweite Tragschicht 22 ebenfalls auf deren Korngröße von 0,7 mm ausgezogen, die zweite Faserlage 32 aufgelegt und anschließend die dritte Tragschicht 23, ebenfalls in Partikelgröße 201 von 0,7 mm ausgezogen. Dabei wird die Platte 1 auf einer ebenen Unterlage in der gewünschten Plattengröße mit einem entsprechenden Rand, beispielsweise in der in Figur 1 dargestellten Rechteckform, hergestellt.

Nach einer ausreichenden Trockenzeit wird auf der Oberseite 24 der Tragschicht 2 eine zweite Haftgrundierung 42 aufgebracht. Auf die zweite Haftgrundierung 42 wird anschließend eine Farbspachtelschicht 5 aufgebracht. Im dargestellten Ausführungsbeispiel besteht die Farbspachtelschicht 5 aus einer ersten Teilschicht 51 und einer zweiten Teilschicht 52, die nacheinander, gegebenenfalls mit einer kurzen Trockenzeit dazwischen, in handwerklicher Wisch- oder Spachteltechnik aufgebracht werden.

Nach Fertigstellung der Farbspachtelschicht 5, die je nach gewünschter Farbgestaltung entsprechende Farbpigmente enthält, wird eine Versiegelung 6 auf der Oberfläche aufgebracht. Die Versiegelung besteht beispielsweise aus einem Klarlack auf PU-Basis.

Nach dem Ausformen der Platte von der ebenen Unterlage wird die Unterseite 20 der Tragschicht 2 mit einer ersten Haftgrundierung 41 versehen, sodass die Platte 1 mittels Kleber sicher an Wänden, Decken und Böden festgeklebt werden kann. Als Kleber eignen sich hydraulisch härtende Kleber, wie beispielweise Fliesenkleber, die dünn ausgestrichen, beispielweise mit einem Zahnspachtel, zur sicheren Befestigung dienen.

Die Platten 1 werden somit handwerklich oder industriell vorgefertigt, sodass die Trockenzeiten innerhalb der Produktion anfallen. Die fertig vorbereiteten Platten 1 können dann gegebenenfalls fertig konfektioniert zur Baustelle gebracht werden und dort ähnlich einer Ausbauplatte oder großen Fliesenelementen verarbeitet werden. Dies kann durch angelernte Kräfte erfolgen, wobei lediglich die Abbindezeit des verwendeten Klebers zum Befestigen der Platten 1 am Untergrund, beispielsweise ein Fliesenkleber, und etwaiger noch durchzuführender Silikondichtungen abgewartet werden müssen. Nachfolgend ist dann das sanierte Bad oder die neu eingebaute Küche nutzbar.

In Figur 3 ist in einer Draufsicht ein Ausschnitt aus einem Badezimmer B mit einer im Eckbereich liegenden Dusche D dargestellt. An den Wänden werden zur Sanierung jeweils zwei Platten 1,1 in einer geeigneten Größe angeklebt, sodass die Breite der Dusche D überdeckt und eine entsprechend ausreichende Höhe, beispielsweise 2 m berücksichtigt ist. Entsprechend beträgt die Größe der Platte 1 beispielsweise 1,00 m x 2,00 m, oder bei deckenhoher Verkleidung 1,00 m x 2,50 m.

Bevorzugt ist die Platte 1 nur 3 bis 7 mm stark, sodass sie einerseits ein relativ geringes Eigengewicht und eine geringe Aufbauhöhe aufweist. Dabei werden vorzugsweise bei der Herstellung der Platte 1 bereits die Durchlässe für die Armaturen, etwaige Steckdosen beim Vorsehen für den Küchenspiegel oder Leuchten bei der Deckenmontage berücksichtigt. Entsprechend kann vor Ort die Platte 1 unmittelbar montiert werden, ohne dass handwerklich aufwendige und stauberzeugende Nacharbeiten vor Ort erforderlich sind.

In Figur 4 ist eine weitere Ausführungsform der Platte 1 als Formelement 1' für die Treppenrenovierung dargestellt. Dabei wird auf einer Universalform ein L-förmig abgewinkeltes Formelement 1', ebenso wie zur Figur 2 dargestellt, aufgebaut, wobei im Treppenkantenbereich beispielsweise eine Verstärkungsschiene (Putzschiene) 33 eingearbeitet werden kann. Die Sichtflächen 11 als Trittstufe wie auch als Setzstufe könnnen ebenso wie bei der Platte 1 gemäß Figur 1 in einer bevorzugt aus mehreren Teilschichten bestehenden Farbspachtelschicht 5 gestaltet sein, wobei die Oberfläche bevorzugt eine Versiegelung 6 aufweist, beispielsweise ein PU-basierter Klarlack. Nachfolgend wird eine Rezeptur für zwei rechteckige Platten 1,00 x 2,00 m beschrieben:
Zunächst werden 16,00 kg Weißzement mit 6,08 Liter PCI-Kunstharzemulsion gemischt mit Wasser im Verhältnis 1:2 mit 4,80 kg Quarzsand grob (Körnung bis 0,70 mm) vermischt und zu einer pastösen Masse verrührt.

Auf einem ebenen Untergrund oder einem Arbeitstisch wird eine Polypropylenplatte als ebene Unterlage und Trennschicht mit einem entsprechenden Rahmen von 1,00 x 2,00 m aufgelegt. Darin wird zunächst eine dünne Schicht der angemischten Masse dünn ausgestrichen (erste Tragschicht 21). Darauf wird ein vorher zugeschnittenes Glasfasergewebe Capatec 650 als erste Faserlage 31 aufgelegt. Anschließend wird die zweite Tragschicht 22 aus der vorbereiteten Masse über der ersten Faserlage 31 (Capatec 650) dünn ausgestrichen. Darauf wird die zweite Faserlage 32, ebenfalls aus Capatec 650, aufgelegt und die dritte Tragschicht 23 aus dem Rest der Masse dünn ausgestrichen.

Nach dem Durchtrocknen der so aufgebauten Tragschicht 2 wird die Oberfläche mit einem 80er Schleifmittel geschliffen und anschließend mit einer Kunstharzgrundierung als zweite Haftgrundierung 42 versehen.

Nun wird 1,00 kg Weißzement mit 0,475 Liter PCI Kunstharzemulsion und entsprechend der ästhetischen Vorgaben mit einigen Gramm Farbpigmenten des gewünschten Farbtons sorgfältig angerührt. Dieser Ansatz wird dann als Farbspachtelschicht 5 dünn als erste Teilschicht 51 in der gewünschten Spachtelstruktur aufgetragen.

Nach dem Trocknen wird diese Schicht mit 120er Körnung geschliffen und mit einem neuen Ansatz von 1,00 kg Weißzement und 0,475 Liter PCI Emulsion plus Farbpigmenten ebenfalls in der gewünschten Form als zweite Teilschicht 52 übergespachtelt. Bedarfsweise können noch weitere Teilschichten aufgetragen werden.

Nach dem Austrocknen der Farbspachtelschicht 5 wird deren Oberfläche gleichmäßig fein mit 180er Körnung geschliffen und anschließend eine Grundierung aus PCI Emulsion und Wasser, gemischt im Verhältnis 1:1 als optionale Grundierung für die Versiegelung aufgetragen.

Nach drei Stunden Trockenzeit wird dann die Versiegelung 6, beispielsweise Brillux 474 in zwei Anstrichen mittels Rollen aufgebracht. Nun kann die Platte 1 von der ebenen Unterlage abgenommen und an seiner Unterseite 20 mit einer ersten Haftgrundierung 41 versehen werden. Die Platte 1 ist dann einbaufertig.

### Bezugszeichenliste

- 1: Platte
- 1': Formelement
- 11: Sichtfläche

- 2: Tragschicht
- 20: Unterseite
- 201: Quarzsand-Partikel
- 21: erste Tragschicht
- 22: zweite Tragschicht
- 23: dritte Tragschicht
- 24: Oberseite

- 3: Faserlage
- 31: erste Faserlage
- 32: zweite Faserlage
- 33: Verstärkungsschiene (Putzschiene)

- 4: Haftgrundierung
- 41: erste Haftgrundierung
- 42: zweite Haftgrundierung

- 5: Farbspachtelschicht
- 51: erste Teilschicht
- 52: zweite Teilschicht

- 6: Versiegelung

- B: Badezimmer
- D: Dusche

## Patentansprüche

1. Verfahren zur Herstellung einer Platte (1) mit den Schritten,
- Aufbringen einer ersten Tragschicht (21) auf einer ebenen Unterlage;
- Auflegen einer ersten Faserlage (31) auf dieser ersten Tragschicht (21);
- Aufbringen einer zweiten Tragschicht (22) auf der ersten Faserlage (31);
- Auflegen einer zweiten Faserlage (32) auf dieser zweiten Tragschicht (22);
- Aufbringen einer dritten Tragschicht (23) auf der zweiten Faserlage (32), wobei die Stärke der Tragschichten durch grobe, skalierte Partikel in der aufzutragenden Masse gesteuert wird;
- nach einer ersten Trockenzeit Auftragen einer Farbspachtelschicht (5);
- Auftragen einer Versiegelung (6) und/oder Imprägnierung und
- nach einer zweiten Trockenzeit Ausformen der Platte (1) von der ebenen Unterlage.

2. Verfahren nach Anspruch 1, **dadurch gekennzeichnet, dass** die Farbspachtelschicht (5) in zwei oder mehreren Teilschichten (51, 52) nacheinander aufgetragen wird.

3. Verfahren nach Anspruch 1 oder 2, **dadurch gekennzeichnet, dass** nach dem Ausformen auf der bei der Herstellung der Platte (1) zur ebenen Unterlage zeigenden Rückseite eine erste Haftgrundierung (4) aufgetragen wird.

4. Verfahren nach Anspruch 1, 2 oder 3, **dadurch gekennzeichnet, dass** nach der ersten Trockenzeit und vor dem Auftragen der Farbspachtelschicht (5) die Tragschicht (2) geschliffen wird.

5. Verfahren nach einem der vorangehenden Ansprüche, **dadurch gekennzeichnet, dass** nach der ersten Trockenzeit und vor dem Auftragen der Farbspachtelschicht (5) die Tragschicht (2) mit einer zweiten Haftgrundierung (42) versehen wird.

6. Platte (1) aufweisend eine zementgebundene, faserverstärkte Tragschicht (2), **dadurch gekennzeichnet, dass** sie einseitig mit einer Farbspachtelschicht (5) aus Weißzement beschichtet ist.

7. Platte (1) nach Anspruch 6, **dadurch gekennzeichnet, dass** die Farbspachtelschicht (5) aus zwei oder mehreren Teilschichten besteht, die Farbpigmente enthalten.

8. Platte (1) nach Anspruch 6 oder 7, **dadurch gekennzeichnet, dass** die Tragschicht (2) aus Zement, Quarzsand und einer Kunstharzemulsion gebildet ist, wobei zwei zueinander beabstandet angeordnete Faserlagen (3) darin enthalten sind.

9. Platte (1) nach Ansruch 6, 7 oder 8, **dadurch gekennzeichnet, dass** die freie Oberfläche der Farbspachtelschicht (5) mit einer Versiegelung (6) auf PU-Basis beschichtet ist.

10. Platte (1) nach Anspruch 6, 7, 8 oder 9, **dadurch gekennzeichnet, dass** die Tragschicht (2) eine Stärke von 2 bis 6 mm, insbesondere 3 bis 5 mm und die Farbspachtelschicht (5) eine Stärke von 0,2 bis 3 mm, insbesondere 0,5 bis 1 mm aufweisen.
